# EUROPEAN PATENT SPECIFICATION

(11) **EP 1 388 250 B1**
(45) Date of publication and mention of the grant of the patent: **11.07.2007**
(21) Application number: 02733722.9
(22) Date of filing: 17.05.2002
(51) Int. Cl.: H04M 3/00, H04Q 7/24, H04Q 7/26

(54) **SERVICES IN A TELEPHONY SYSTEM**
DIENSTE IN EINEM FERNSPRECHSYSTEM
SERVICES FOURNIS DANS LE CADRE D'UN SYSTEME DE TELEPHONIE

(30) Priority: 17.05.2001 US 291743 P; 17.05.2001 SE 0101755
(43) Date of publication of application: 11.02.2004
(73) Proprietor: TELEFONAKTIEBOLAGET LM ERICSSON (publ), 164 83 Stockholm (SE)
(72) Inventor: HÖGLANDER, Mats, Anders, S-139 36 Värmdö (SE); FERNANDEZ, Javier, Perez, E-28030 Madrid (ES); ISAKSSON, Leif, Stellan, S-135 42 Tyresö (SE); ROXNÄS, Kjell, Gunnar, S-468 33 Vargön (SE)
(74) Representative: Holmberg, Nils Anders Patrik
(86) International application number: PCT/SE2002/000966
(87) International publication number: WO 2002/093884

(56) References cited:
- WO-A2-99/38338
- FR-A1- 2 796 796
- GB-A- 2 334 407
- JP-A- 8 102 795

## Description

### TECHNICAL FIELD

The present invention relates services in a telephony system. Especially, the present invention relates to a telephone exchange being capable of providing advanced telephony services, and a method, computer program product and means for providing such services.

### BACKGROUND OF THE INVENTION

The number of employees working away from the office is constantly increasing. For these users the public mobile/fixed telephony network is their key interface to their offices and desks.

A frustrating aspect of today's communication solutions is that public subscribers, notably mobile phones, are very loosely connected to an enterprise network. When calling from a public phone, mobile or fixed, the used phone is no part of a corporate network and cannot use any PBX(Private Branch Exchange)-features. As a consequence, efficiency is negatively affected. As regards especially the operator function, the service level is very poor. Once a call has been extended to a mobile phone, the control of the call is completely lost, meaning that services like monitoring and recall are not available. The service to people and customers calling is not up to a professional level.

A customer may, as described in the French Patent Application FR 2 796 796 A1, get a SM (Short Message) together with related commands transferred between different exchanges. From the document GB 2 334 407 A, it is known how to interconnect different telephone exchanges.

A cellular user today may belong to a common numbering plan. The user may have automatic call forwarding from his/her PBX extension to his/her cellular phone, but there is no other services, no back office/secretary and no support from his/her company operators.

### BRIEF DESCRIPTION OF THE INVENTION

The following invention addresses the problem to make a telephone communication device, like a mobile radio communication device or a public phone, fully integrated with an exchange of a telephony system, like a corporate exchange of a business network, with full access to end user and operator services, advanced telephone services.

One object of the invention is therefore to provide complete integration of the remote extension of an exchange so that the mobile phone user can use all end-user features and services, like for example call-back and conference. A remote call coming in as a trunk call can be looped through the invented communication platform, the exchange, such that it is perceived as an internal incoming call.

A telephone exchange according to the invention is defined in the independent claim 1. Further, a method and a computer program product according to the invention are defined in the independent claims 11 and 16. Means for prefix signalling between a cellular network and a telephone exchange according to the invention are defined in the independent claims 21 and 23, respectively.

Preferred embodiments are presented and defined in the dependent claims.

One advantage of the invention is that it is practically independent of the public network operator, which means that no complicated inter-working with the public network is required.

### BRIEF DESCRIPTION OF THE DRAWINGS

- Figure 1: is a block diagram illustrating a telephone exchange according to the invention in a telephony system;
- Figure 2: illustrates a flowchart of an embodiment of the invented method;
- Figure 3: illustrates a flowchart of another embodiment of the invented method
- Figure 4: is a block diagram illustrating a telephone exchange according to the invention in a telephony system.

### DETAILED DESCRIPTION OF THE INVENTION

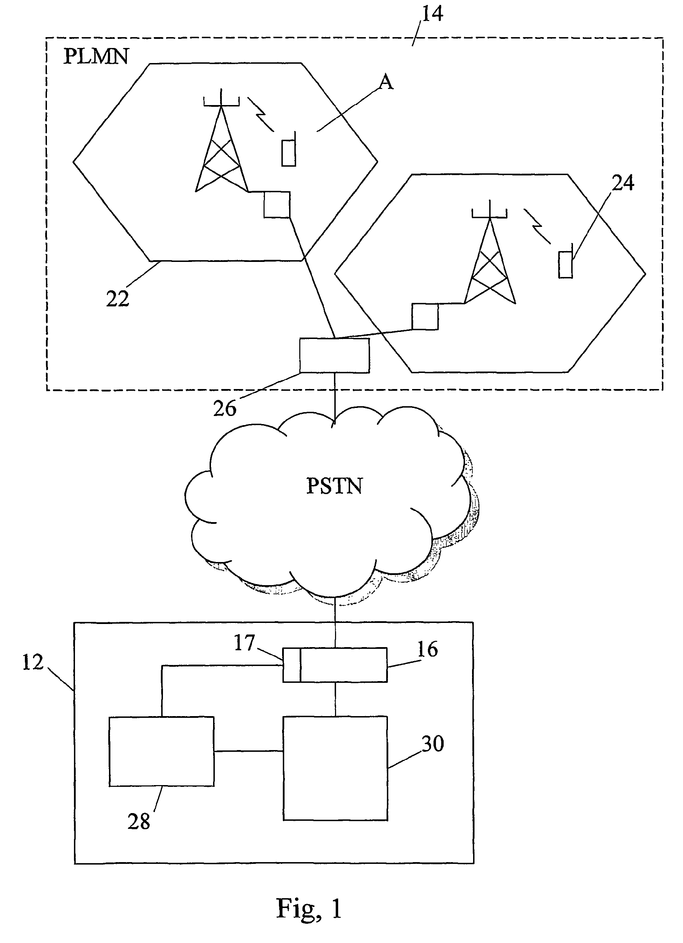

The invention will now be described in more detail with reference to the enclosed drawings, figures 1-4.

The concept of a telephone exchange is not limited to the traditional single node circuit switch, but may consist of a plurality of computers under common administration that share a common set of extension identities and cooperate to set up calls between these.

### Figur 1

A system comprising at least one telephone exchange according to the invention works as follows:
- a user calls in to a pool number/feature access code of the exchange;
- The user calling, is identified;
- The incoming line is associated with an **exchange** extension;
- Dial tone is given;
- The terminal calling is provided with a predefined level of exchange functionality and services.

The calling party is identified and authenticated based on his Calling Line Identity, CLI-number (A-number).

Correspondingly, when a user calls an extension identity that is associated to a telephone communication device belonging to another exchange or network, the system comprising at least one telephone exchange according to the invention works in the following way:
- a user calls such an extension identity;
- the extension identity is checked and identified;
- if the extension identity corresponds to a telephone communication device belonging to another exchange or network, a call is set up by way of an outgoing call from the exchange to the number of the telephone communication device in the other exchange or network;
- providing relevant services to the parties of the call according to the service levels specified for their respective extensions.

Such a system is illustrated in figure 1.

Figure 1 illustrates a telephone exchange 12 being capable of providing advanced telephony services to telephone communication devices belonging to another exchange or network 14. The exchange has *means 16 for integrating* said telephone communication devices as extensions, and means 17 for storing unique identities of said telephone communication devices. The means for integrating telephone communication devices belonging to another exchange or network corresponds to the functionality "Mobile extension" developed by the applicant. The telephone exchange is connected to other networks, in this case a Public Land Mobile Network, PLMN, via a Public Switched Telephone Network, PSTN. The invention is not limited to the illustrated systems. This is only an example for facilitating the understanding of the invention. The PLMN area is divided into a number of cells, in this case two cells, 22 and 24. Each cell has a base station of its own handling the radio traffic related to the mobile radio communication devices in the cell area. The base station of each cell is connected to a Mobile services Switching Centre, MSC, 26 which manages the calls and it is considered as the hart of the cellular radio system. It acts as an interface between a GSM network and public voice and data networks.

The telephone exchange 12comprises a control unit, controller, 28 for controlling and monitoring the operation of the exchange. The controller 28 comprises at least one microprocessor involving storage means for storing data and software programs. The controller is associated with different functional blocks 30(in fig. 1 illustrated as one single block) providing advanced telephony services to connected terminals. The telephone exchange according to the invention comprises *means 16 for integrating* said telephone communication devices as extensions, and means for storing unique identities of said telephone communication devices.

The telephone exchange 12 may comprise means 32 for associating a call to an extension identity in the exchange by means of CLI-information of the incoming call from another exchange or network. The CLI information of an incoming call from another exchange or network is used to associate the call with an extension identity in the exchange by matching the CLI-number to the number of a telephone belonging to another exchange or network that is stored for the extension identity.

One embodiment of the invention also comprises means for storing a service level of said exchange services/ advanced telephony services for the extension.

The service level, which is a set of data that defines which services being allowed for a user of the extension, and data for controlling the function and operation of services, e.g. an indication that calls should be forwarded to another number, may be specified for an extension and the extension identity.

Another embodiment may also comprise means for storing an extension identity corresponding to but not necessarily the same as the number of telephone communication devices in the other exchange or network.

One embodiment of an invented telephone exchange also comprises means for forwarding a call to a voice announcement, when a provided CLI-number doesn't correspond to any extension identity or when no CLI-number is provided, and means for receiving a PIN-code and associate the call with an extension identity for which the entered PIN-code is valid.

Further one embodiment of the invention may also comprise means for associating by means of a PIN-code an extension identity in the exchange and a call from a telephone communication device belonging to another exchange or network.Said PIN-code may be entered by the caller or sent by the telephone communication device.

Another embodiment of the invented telephone exchange also comprises means for setting up a call to an extension corresponding to a telephone communication device belonging to another exchange or network by way of an outgoing call from the exchange to the telephone number of the telephone communication device in the other exchange or network.

Yet another embodiment of the invented telephone exchange also comprises means for storing the current status for the extension, such as if it is free or busy.

One interesting embodiment of the invented exchange comprises means for associating a call with an extension identity in a telephone exchange of a telephony system, said call having a CLI-number and said means comprises:
- means for receiving a call to said telephone exchange;
- means for analysing the CLI-number;
- means for accepting or rejecting the CLI-number;
- means for using the CLI-number to associate the call with an extension number, if the CLI-number is accepted; and
- means for providing relevant **services** to the call according to a service level specified for the extension identity.

As a person skilled in the art understand, mentioned means of all the above described embodiments are possible to implement as coded instructions, which also are possible to store in a computer readable medium and process by some sort of instruction processing unit, such as a computer, microprocessor, etc, etc.

No advanced telephone service has been possible to apply to public extensions (fixed or cellular) by another telephone exchange. Two objects can be achieved by looping a call through such a service platform, like a corporate communication platform/ Private Branch Exchange (PBX) - DTMF signals from the public telephone can be detected and new extension categories can be applied to public extensions. Taking a remote call in as a trunk call, it can then be looped through the communication platform, that is the exchange, such that is perceived as an internal incoming call. Now this incoming call is of a certain extension category to which detailed functional signalling is applied. The public extension is considered and managed from the exchange, such as a corporate communication platform, just as any other internal extension. Consequently other internal users, such as operators, secretaries and colleagues, can follow status on the public extension and apply services on to it.

In another embodiment, the described hardware loop process is replaced by a software process. Therefore, the hardware loop is not necessary.

One embodiment of the invented telephone exchange provides pre-fix signalling. This embodiment comprises:
- means for pre-fix signalling for connection and information transfer between a cellular network and a telephone exchange of a telephony system;
- means for receiving in said telephone exchange a prefix-number, subscriber number and A-number;
- means for associating an extension identity of the exchange with the call, using the supplied A-number;
- means for setting up the call and making advanced telephony services available according to the service level defined for said extension.

As a person skilled in the art understand, mentioned means of the above described embodiment are possible to implement as coded instructions, which also are possible to store in a computer readable medium and process by some sort of instruction processing unit, such as a computer, microprocessor, etc, etc.

The exchange checks for a correct CLI-number, here denoted as an A-number, in a received call. A central monitor of the exchange, means for analysing the CLI-number, will learn from a number analysis if there is an acceptable CLI-number associated with the call. The controller fetches the CLI-number coming in on a trunk and performs a validation. The validation comprises a number of conversion functions. In return from validation, there will come the user's corresponding extension number, in the telephony exchange.

According to the invention, the telephone exchange associates all calls through the exchange with the extension. Contrary to simple call forwarding, services and control can now be provided. When a mobile communication or a fixed remote terminal/ device calls a pool number stored in the exchange, the calling party receives a dial-tone from the exchange and becomes an extension of the exchange. From here on the user can dial just as any other exchange extension. The calling party can be any type of public telephone having a touch-tone, mobile or fixed.

Once the telephone communication device has called and received dial-tone from the exchange, the device is fully integrated as an extension in the exchange numbering plan/data base and can use all advanced telephony services (end-user features) that the pre-defined service level allows, like for example call-back and conference. Services like call forwarding and message diversion will work just as they do from any exchange extension line. Similarly, the operator of the exchange will have access to all standard services, like extending calls to a busy extension, camp-on, get a recall if the extension does not become free with a defined period of time and more direct services like Intrusion. Thus, adequate service can be offered to people calling the user. However, the user service profile is individually profiled. Here follows examples of services/features of advanced telephony services that can be offered by a telephone exchange:
Abbreviate Dialling; Account Code; End-to-end DTMF; Authorisation code; Call-back; Call Diversion; Call Offer; Call Pick-up; Operator/ attendant svs: Extending, Camp on busy, Monitoring, Recall, Serial call, Call Splitting, Intrusion, Forced release; Call waiting; Class of service; Common bell group; Conference; CSTA Monitoring; Custom Identity Storage (CID); Data privacy; Do Not Disturb; Emergency Category; External Number Redial; Faultman's Ring Back; Follow me; Three party services: Hold, Inquiry, Refer Back, Transfer, Conference; Internal Group Hunting; Intrusion; Malicious Call Tracing; Message Diversion; Hot-line; Paging; Parking; Personal Number; Secretarial monitoring; Repeated Individual Diversion (RID); Simplified Interception. This should not be considered as an exhaustive list to which the invention is limited.

Technically, the solution may be achieved by opening up a trunk interface to offer access to the system traffic handling functions. To offer the in-speech services to the users, touch-tone signals are detected and interpreted.

When calling from the telephone communication device in another exchange system or network, the number of the device is reported to the exchange as CLI-number (A-number). However, it is the number of the corresponding extension in the exchange that is reported as CLI-number to the B-party and other exchange software. This way the one-number solution is maintained, on its own as well as with the Interface Personal Number. Charging is therefore correctly reported per subscriber.

It is possible to select an extension identity different to the number of the telephone communication device in the other exchange or network.

### Figure 2

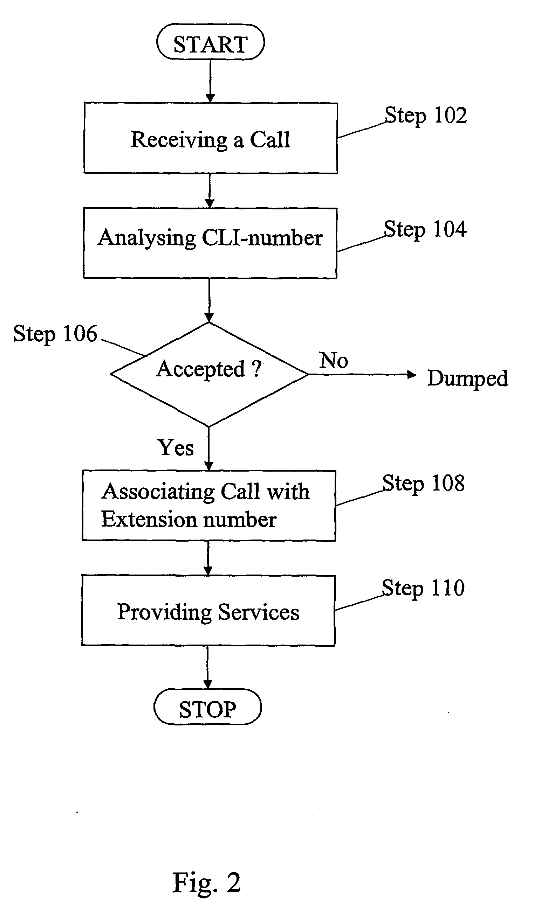

The invention also relates to a method for associating a call with an extension identity in a telephone exchange of a telephony system, said call having a CLI-number. The method is illustrated in the flowchart of fig. 2, and comprises following steps:
- receiving a call to said telephone exchange, step 102;
- analysing the CLI-number, step 104;
- accepting or rejecting the CLI-number, step 106;
- using the CLI-number for associating the call with a corresponding extension number, if the CLI-number is accepted, step 108; and
- providing relevant services to the call according to a service level and other extension data specified for the extension identity, step 110.

The steps of said method for associating a call can be implemented as coded instructions in a computer software program that is processable by the hardware of the exchange of the telephony system. Thus, the invention also relates to a computer program product for associating a call with an extension identity in a telephone exchange of a telephony system. Said call has a CLI-number. The computer program product comprises:
a computer-readable storage medium having computer-readable program code means embodied in said medium, said computer-readable program code means comprises:
   - computer-readable program code means for receiving a call to said telephone exchange;
   - computer-readable program code means for analysing the CLI-number;
   - computer-readable program code means for accepting or rejecting the CLI-number;
   - computer-readable program code means for using the CLI-number associating the call with extension number, if the CLI-number is accepted; and
   - computer-readable program code means for providing relevant services to the call according to a service level and other extension data specified for the extension identity.

### Figure 3

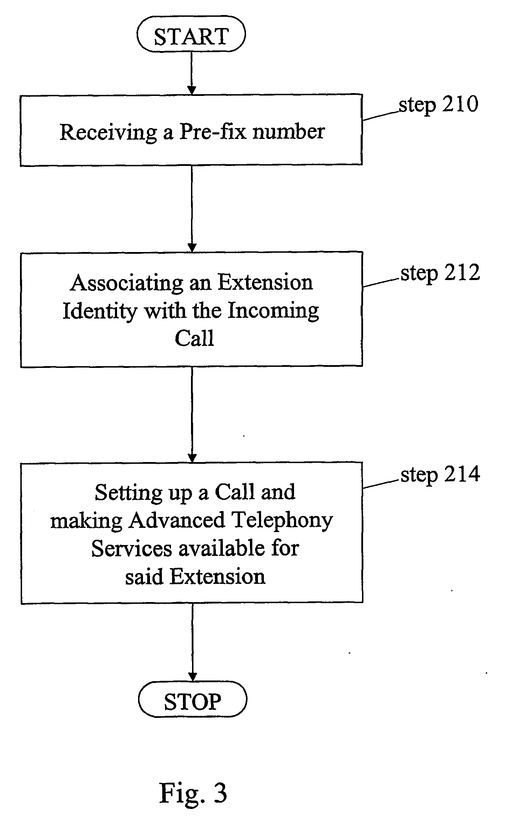

The invention also relates to a method for pre-fix signalling for connection and information transfer between cellular network and an interface of a telephony system. Figure 3 illustrates a flowchart of the invented method for pre-fix signalling for connection and information transfer between cellular network and an exchange of a telephony system. The present invention is completely independent of the operator for the public extension. However, with some inter-working with the public network the existing end-users user-interface can be maintained. Especially, this is true for the users in a cellular network system where identity numbers now can be sent as packages from the mobile communication device/terminal to a MSC and from the MSC to a telephone exchange, such as a corporate communication platform. Sent digitally this way the call set-up will be in line with normal cellular call set-up, and at the same time additional information can accompany the call.

Necessary conditions for inter-working are that the cellular network can deploy a VPN service (Virtual Private network) with some additions on the numbers sent to the trunk, and that the trunk signalling/ data can be sent untouched into the exchange, such as a corporate communication platform.

By use of the invention a user of a mobile radio communication terminal can dial any number structure defined in the VPN set-up (short numbers, local numbers, national or international numbers) and always be associated with the same exchange extension in the telephone exchange, such as a corporate communication platform. In the call set-up to the exchange the mobile operator sends a feature access code and the called number (B-Number) including public/private access codes as needed. The telephone exchange will look for additional digits in the calls coming in to this specific exchange extension, as defined in the specific extension type assigned to this exchange extension. From here on, the telephone exchange takes over and uses the "prefix sent" B-number, and access numbers if needed, to correctly set up the call.

Thus, the invented method for pre-fix signalling for connection and information transfer between a cellular network and a telephone exchange of a telephony system comprises the following steps:
- receiving in said telephone exchange a prefix-number and a called subscriber number, said prefix number having been added by the Mobile Switching Centre in dependence of the identity of the calling subscriber, and corresponding to a feature acces code for access to advanced telephony services, step 210;
- associating an extension identity of the exchange with the incoming call, using the CLI-number of the call, step 212;
- setting up the call and making advanced telephony services available according to the service level and other extension data for said extension, step 214.
The steps of said method for pre-fix signalling can be implemented as coded instructions in a computer software program that is processable by the hardware of the exchange of the telephony system. Thus, the invention also relates to a computer program product for pre-fix signalling causing connection and information transfer between a cellular network and a telephone exchange of a telephony system, characterised in that, the computer program product comprises:
a computer-readable storage medium having computer-readable program code means embodied in said medium, said computer-readable program code means comprises:
   - a computer-readable code means for receiving a called number in a switching centre (MSC) of the cellular network;
   - a computer-readable code means for identifying the calling subscriber;
   - a computer-readable code means for adding a predefined prefix-number, which is or corresponds to a feature access code (FC) for access to advanced telephony services;
   - a computer-readable code means for transmitting the complete prefix-number, called number and A-number to the telephone exchange;
   - a computer-readable code means for receiving in said telephone exchange the complete prefix-number, called number and A-number;
   - a computer-readable code means for associating an extension identity of the exchange with the call, using the supplied A-number;
   - a computer-readable code means for setting up the call and making advanced telephony services available according to the service level defined for said extension.

As an alternative, a sub-address field in the ISDN protocol can be used instead of the long number prefix dialling method. The B-number including access codes is put into the sub-address field. When an information package is received at the telephone exchange, the sub-address field is un-packaged and the B-number is handled as normally for the mobile extension of the exchange of the telephony system.

Therefore, the invented method for pre-fix signalling will comprise the following steps:
- transmitting the feature access code in a called number field over an ISDN physical random access channel;
- transmitting the called subscriber number in an address field over an ISDN physical random access channel;
- receiving the feature access code in the called number field over an ISDN physical random access channel;
- receiving the called subscriber number in the address field over an ISDN physical random access channel.

The transmission of A-Number is not changed and has been omitted for clarity

Accordingly, a computer program product according to the modified pre-fix signalling method comprises following computer- readable program code means:
- a computer-readable code means for transmitting the feature access code in a called number field over an ISDN physical random access channel;
- a computer-readable code means for transmitting the called subscriber number in an address field over an ISDN physical random access channel 1;
- a computer-readable code means for receiving the feature access code in the called number field of an ISDN physical random access channel;
- a computer-readable code means receiving the called subscriber number in the address field of an ISDN physical random access channel.

### Figure 4

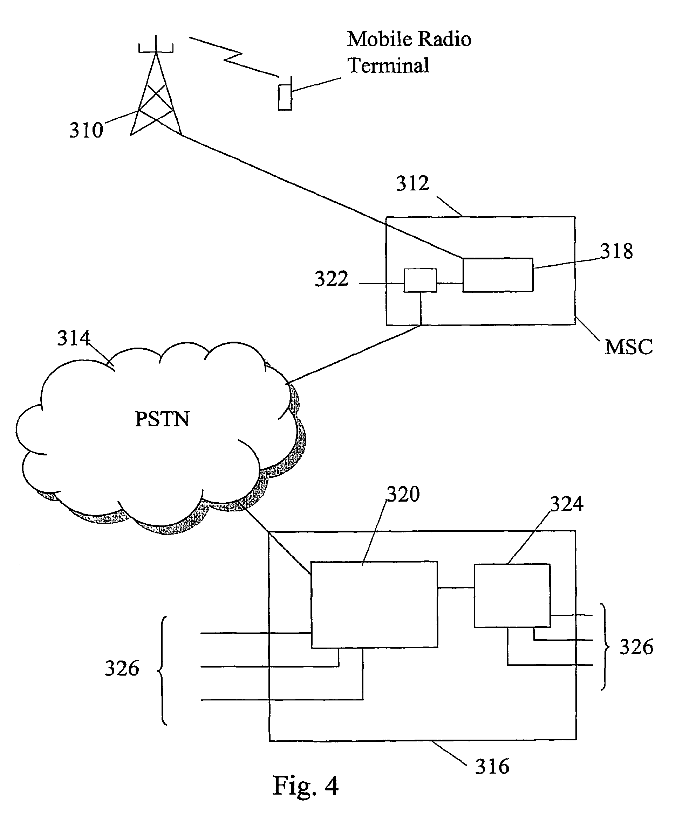

The method for pre-fix signalling may be considered to comprise one transmitting session part that is performed in a mobile services switching centre, MSC, and one receiving session part that is performed in a telephone exchange. Consequently, the MSC and the exchange have to be provided with corresponding means. Figure 4 is a block diagram illustrating a system 300 for prefix signalling according to the invention. The system comprises at least one base station 310 connected to a mobile service switching centre, MSC, 312. The MSC 312 is connected to the telephone exchange 316 over a public switching telephone network, PSTN, 314. The telephone exchange has user extensions 326. The means for pre-fix signalling, 322 and 324, are integrated with the MSC system 318 and the telephone exchange system 320, respectively.

Means 322 for pre-fix signalling for connection and information transfer between a cellular network and a telephone exchange of a telephony system. Said means is used in a switching centre (MSC) of the cellular network. Said means comprises:
- means for receiving a called subscriber number in the switching centre (MSC) of the cellular network;
- means for identifying the calling subscriber;
- means for adding a predefined prefix-number, which is or corresponds to a feature access code (FC) for access to advanced telephony services;
- means for transmitting the prefix-number, subscriber number and A-number to a telephone exchange;
- means for transmitting the prefix-number, subscriber number and A-number to a telephone exchange comprises:
- means for transmitting the feature access code in a called number field over an ISDN physical random access channel;
- means for transmitting the called subscriber number in an address field over an ISDN physical random access channel.

Corresponding means 324 for pre-fix signalling for connection and information transfer between a cellular network and a telephone exchange of a telephony systemis used in a telephone exchange. Said means 324 further comprises:
- means for receiving in said telephone exchange the prefix-number, subscriber number and A-number;
- means for associating an extension identity of the exchange with the call, using the supplied A-number;
- means for setting up the call and making advanced telephony services available according to the service level defined for said extension.

Corresponding means 324 for pre-fix signalling for connection and information transfer between a cellular network and a telephone exchange of a telephony system over an ISDN physical random access channel is used in a telephone exchange. Said means 324 further comprises:
- means for receiving the feature access code in a called number field over an ISDN physical random access channel;
- means for receiving the called subscriber number in an address field over an ISDN physical random access channel.

Further one aspect of the invention is a method for transmitting a complete subscriber number from a mobile radio communication device to an exchange of a telephony system when calling a subscriber extension of said exchange. Said method takes advantage of the Calling Card function in mobile radio communication terminals. Said function is intended to be used for calling at lower cost via a third party. According to the invention, the Calling Card function is used to automatically perform prefix sending to the exchange/corporate communication platform.

Said method comprises following steps for automatically generating and transmitting a subscriber number from a mobile radio communication terminal to a telephone exchange of a telephony system when calling:
- initiating a calling card function stored in said mobile radio communication terminal;
- sending by use of the calling card function a feature access code in front of a selected subscriber number to the telephone exchange of the telephony system.

The invention also relates to a computer program product, comprising computer- readable program code for automatically generating and transmitting a complete prefix number when calling from a mobile radio communication device to a telephone exchange of a telephony system. The mobile radio communication device comprises a computer-readable storage medium having computer-readable program code means embodied in said medium, said computer-readable program code means comprises:
- a computer-readable code means for initiating a calling card function stored in said mobile radio communication terminal.
- sending by use of the calling card function a feature access code and optionally a PIN-code in front of a selected subscriber number to the telephone exchange of the telephony system.

A mobile subscriber can use any mobile standard, not only 2G, 2.5G or 3G, but GSM, GPRS, D-AMPS, UMTS etc, etc.... Any standard can be made an extension to the exchange. The same applies to any fixed line subscription supporting touch-tone signalling. This means that today's problem of not having full access to the corporate network when using the cellular phone, or being out of the office, is eliminated. By integrating mobile users in the corporate network, without geographical restrictions, efficiency is greatly improved. The invention provides increased service and efficiency through-out the operators whole network, no limitations to specific radio base stations, area codes or other boundaries.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A telephone exchange (12) being capable of providing advanced telephony services to telephone communication devices (24) belonging to another exchange (26) or network (14), **characterized in that** it comprises means (16,17,28, 30) for associating an incoming call from another exchange or network with an extension identity in the exchange that corresponds to the calling telephone device by means of CLI-information of the incoming call.

2. A telephone exchange according to claim 1, **characterised in that** said telephone communication devices (24) are mobile radio telephone terminals for cellular communication.

3. A telephone exchange according to claim 1 or 2, **characterised in that** said telephone exchange is arranged to set up a connection between said telephone communication device (26) and the exchange via a Public Switched Telephony Network (PSTN).

4. A telephone exchange according to any of the preceding claims, **characterised in that** the exchange comprises means for forwarding a call to a voice announcement, when a provided CLI-number does not correspond to any extension identity or when no CLI-number is provided.

5. A telephone exchange according to claim 4, **characterised in that** the exchange comprises means for associating by means of a PIN-code an extension identity in the exchange and a call from a telephone communication device belonging to another exchange or network, wherein said PIN-code is entered by the caller or sent by a phone.

6. A telephone exchange according to any of the preceding claims, **characterised in that** the exchange comprises means for setting up a call to an extension of the exchange corresponding to a telephone communication device belonging to another exchange or network by way of an outgoing call from the exchange to the number of the telephone communication device in the other exchange or network.

7. A telephone exchange according to any of the preceding claims, **characterised in that**, the exchange comprises means for associating an incoming call with an extension identity (326) in a telephone exchange (12, 316) of a telephony system, said call having a CLI-number, **characterised in that** said means comprises:
- means for receiving a call to said telephone exchange;
- means for analysing the CLI-number;
- means for accepting or rejecting the CLI-number;
- means for using the CLI-number to associate the call with an extension identity, if the CLI-number is accepted; and
- means for providing relevant services to the call according to a service level specified for the extension identity.

8. A telephone exchange according to claim 1, **characterised in that** the exchange comprises:
- means for receiving in said telephone exchange a prefix-number and a called subscriber number, said prefix number having been added by a Mobile Switching Centre in dependence of the identity of the calling subscriber, and corresponding to a feature access code for access to advanced telephony services;
- means for associating an extension identity of the exchange with the incoming call, using the CLI-number of the call;
- means for setting up the call and making advanced telephony services available according to the service level defined for said extension identity.

9. A telephone exchange according to claim 1, **characterised in that** it comprises means for storing a service level of said exchange services to the extension.

10. A telephone exchange according to claim 1, **characterised in that** it comprises means (17) for storing an extension identity corresponding to the telephone communication device (24) belonging to another exchange or network, wherein the extension identity does not need to be the same as the telephone number of the telephone communication device (24) in the other exchange or network.

11. Method for providing advanced telephony services to calls from telephone communication devices (24) belonging to another exchange (26) or network (14), **characterized by** the step of associating an incoming call from another exchange or network with an extension identity in the exchange that corresponds to the calling telephone device by means of CLI-information of the incoming call.

12. Method according to claim 11, **characterised by** the following steps:
- receiving a call to said telephone exchange (step 102);
- analysing the CLI-number (step 104);
- accepting or rejecting the CLI-number (step 106);
- using the CLI-number to associate the call with an extension number, if the CLI-number is accepted (step 108); and
- providing relevant services to the call according to a service level specified for the extension identity (step 110).

13. Method according to claim 11 or 12, wherein said method is adapted to pre-fix signalling for connection and information transfer between a cellular network and a telephone exchange (316) of a telephony system, **characterised in that**, the method comprises the following steps:
- receiving in said telephone exchange a prefix-number and a called subscriber number, said prefix number having been added by the Mobile Switching Centre in dependence of the identity of the calling subscriber, and corresponding to a feature access code for access to advanced telephony services (step 210);
- associating an extension identity of the exchange with the incoming call, using the CLI-number of the call (step 212),
- setting up the call and making advanced telephony services available according to the service level defined for said extension (step 214).

14. Method according to claim 13, **characterised in that**
- the feature access code is received in a called number field of an ISDN physical random access channel; and
- the called subscriber number is received either in the called number field or in an address field of an ISDN physical random access channel

15. Method according to claim 14, wherein said method is adapted to pre-fix signalling for connection and information transfer between a cellular network and a telephone exchange (12) of a telephony system, **characterised in that**, the method comprises the following steps for automatically generating and transmitting a prefix-number and called subscriber number from a mobile radio communication terminal (24) to a telephone exchange (12, 316) of a telephony system when calling:
- initiating a calling card function stored in said mobile radio communication terminal;
- sending by use of the calling card function a feature access code for access to advanced telephony services before a subscriber number to the telephone exchange of the telephony system.

16. A computer program product for providing advanced telephony services to calls from telephone communication devices (24) belonging to another exchange (26) or network (14), the computer program product comprises:
a computer-readable storage medium having computer-readable program code means embodied in said medium, said computer-readable program code means comprises computer-readable program code means for associating an incoming call from another exchange or network with an extension identity in the exchange that corresponds to the calling telephone device by means of CLI-information of the incoming call.

17. A computer program product according to claim 16, **characterised in that**, the computer program product comprises:
a computer-readable storage medium having computer-readable program code means embodied in said medium, said computer-readable program code means comprises:
- computer-readable program code means for receiving a call to said telephone exchange;
- computer-readable program code means for analysing the CLI-number;
- computer-readable program code means for accepting or rejecting the CLI-number;
- computer-readable program code means for using the CLI-number to associate the call with an extension number, if the CLI-number is accepted; and
- computer-readable program code means for providing relevant services to the call according to a service level specified for the extension identity.

18. A computer program product according to claim 16, said computer program product comprises computer-readable program code means for pre-fix signalling causing connection and information transfer between a cellular network and a telephone exchange of a telephony system; **characterised in that**, the computer program product comprises:
a computer-readable storage medium having computer-readable program code means embodied in said medium, said computer-readable program code means comprises:
- a computer-readable code means for receiving in said exchange a prefix-number and a called subscriber number, said prefix-number having been added by the Mobile Switching Centre in dependence of the identity of the calling subscriber, and corresponding to a feature access code for access to advanced telephony services;
- a computer-readable code means for associating an extension identity of the exchange with the incoming call, using the the CLI-number of the call;
- a computer-readable code means for setting up the call and making advanced telephony services available according to the service level defined for said extension.

19. A computer program product according to claim 18, said computer- readable program code means comprises:
- a computer-readable code means for receiving the feature access code in a called number field of an ISDN physical random access channel; and
- a computer-readable code means for receiving a called subscriber number either in the called number field or in an address field of an ISDN physical random access channel.

20. A computer program product according to claim 16, said computer program product comprise computer- readable program code for automatically generating and transmitting a prefix-number and a subscriber number when calling from a mobile radio communication terminal to a telephone exchange, **characterised by** a computer-readable storage medium having computer-readable program code means embodied in said medium, said computer-readable program code means comprises:
- a computer-readable code means for initiating a calling card function stored in said mobile radio communication terminal.
- sending by use of the calling card function a feature access code for access to advanced telephony services before a selected subscriber number to the telephone exchange of the telephony system.

21. Means for pre-fix signalling for connection and information transfer between a cellular network and a telephone exchange according to claim 1, said means being used in a switching centre (MSC, 312) of the cellular network **characterised in that**, said means further comprises:
- means for receiving a called subscriber number in the switching centre (MSC, 312) of the cellular network;
- means for identifying the calling subscriber;
- means for adding a predefined prefix-number, which is or corresponds to a feature access code (FC) for access to advanced telephony services;
- means for transmitting the prefix-number and subscriber number to a telephone exchange (12,316).

22. Means according to claim 21, **characterised in that** said means for transmitting the prefix-number and subscriber number to a telephone exchange (12, 316) comprises:
- means for transmitting the feature access code in a called number field of an ISDN physical random access channel; and
- means for means for transmitting a called subscriber either in the called number field or in an address field of an ISDN physical random access channel

23. Means for pre-fix signalling for connection and information transfer between a cellular network and a telephone exchange (12,316) according to claim 1, said means being used in the telephone exchange, **characterised in that** said means further comprises:
- means for receiving in said telephone exchange a prefix-number and a called subscriber number, said prefix number having been added by a Mobile Switching Centre (326) in dependence of the identity of the calling subscriber, and corresponding to a feature access code for access to advanced telephony services;
- means for associating an extension identity of the exchange with the incoming call, using the CLI-number of the call;
- means for setting up the call and making advanced telephony services available according to the service level defined for said extension.

## Patentansprüche

1. Eine Telefonvermittlung (12), die in der Lage ist, fortschrittliche Telefondienste an Telefonkommunikationsgeräte (24) bereitzustellen, die zu einer anderen Vermittlung (26) oder Netz (14) gehören, **dadurch gekennzeichnet, dass** sie umfasst eine Einrichtung (16, 17, 28, 30) zum Zuordnen eines eingehenden Anrufs von einer anderen Vermittlung oder Netz zu einer Nebenstellenidentität bzw. Erweiterungsidentität in der vermittlung, die dem anrufenden Telefongerät entspricht, mittels CLI-Information des eingehenden Anrufs.

2. Eine Telefonvermittlung nach Anspruch 1, **dadurch gekennzeichnet, dass** die Telefonkommunikationsgeräte (24) Mobilfunktelefonendgeräte für zellulare Kommunikation sind.

3. Eine Telefonvermittlung nach Anspruch 1 oder 2, **dadurch gekennzeichnet, dass** die Telefonvermittlung angeordnet ist, um eine Verbindung einzurichten zwischen dem Telefonkommunikationsgerät (26) und der Vermittlung über ein öffentliches Telefonnetz (PSTN, Public Switched Telephony Network).

4. Eine Telefonvermittlung nach einem der vorhergehenden Ansprüche, **dadurch gekennzeichnet, dass** die Vermittlung eine Einrichtung zum Weiterleiten eines Anrufs auf eine Sprachansage umfasst, wenn eine bereitgestellte CLI-Nummer nicht irgendeiner Nebenstellenidentität entspricht, oder wenn keine CLI-Nummer bereitgestellt wird.

5. Eine Telefonvermittlung nach Anspruch 4, **dadurch gekennzeichnet, dass** die Vermittlung eine Einrichtung umfasst zum Zuordnen mittels eines PIN-Codes, einer Nebenstellenidentität in der Vermittlung und eines Anrufs von einem Telefonkommunikationsgerät, das zu einer anderen Vermittlung oder Netz gehört, wobei der PIN-Code eingegeben wird durch den Anrufer oder gesendet wird durch ein Telefon.

6. Eine Telefonvermittlung nach einem der vorhergehenden Ansprüche, **dadurch gekennzeichnet, dass** die Vermittlung eine Einrichtung umfasst zum Einrichten eines Anrufs an eine Nebenstelle der Vermittlung, die einem Telefonkommunikationsgerät entspricht, das zu einer anderen Vermittlung oder Netz gehört, durch einen ausgehenden Anruf von der Vermittlung zu der Nummer des Telefonkommunikationsgeräts in der anderen Vermittlung oder Netz.

7. Eine Telefonvermittlung nach einem der vorhergehenden Ansprüche, **dadurch gekennzeichnet, dass** die Vermittlung eine Einrichtung umfasst zum Zuordnen eines eingehenden Anrufs zu einer Nebenstellenidentität (326) in einer Telefonvermittlung (12, 316) eines Telefonsystems, wobei der Anruf eine CLI-Nummer aufweist, **dadurch gekennzeichnet, dass** die Einrichtung umfasst:
- eine Einrichtung zum Empfangen eines Anrufs an die Telefonvermittlung;
- eine Einrichtung zum Analysieren der CLI-Nummer;
- eine Einrichtung zum Akzeptieren oder Ablehnen der CLI-Nummer;
- eine Einrichtung zum Verwenden der CLI-Nummer zum Zuordnen des Anrufs zu einer Nebenstellenidentität, falls die CLI-Nummer akzeptiert wird; und
- eine Einrichtung zum Bereitstellen von relevanten Diensten zu dem Anruf gemäß einem Dienstniveau, das spezifiziert wird für die Nebenstellenidentität.

8. Eine Telefonvermittlung nach Anspruch 1, **dadurch gekennzeichnet, dass** die Vermittlung umfasst:
- eine Einrichtung zum Empfangen in der Telefonvermittlung einer Präfix-Nummer und einer Angerufene-Teilnehmer-Nummer, wobei die Präfix-Nummer hinzugefügt wurde durch eine Mobilfunkvermittlung, in Abhängigkeit der Identität des anrufenden Teilnehmers, und einem Feature-Zugangs-Code bzw. Spezialzugangscode zum Zugreifen auf fortschrittliche Telefondienste entspricht;
- eine Einrichtung zum Zuordnen einer Nebenstellenidentität der Vermittlung zu dem eingehenden Anruf, unter Verwendung der CLI-Nummer des Anrufs;
- eine Einrichtung zum Einrichten des Anrufs und Durchführen von fortschrittlichen Telefondiensten, die verfügbar sind gemäß dem Dienstniveau, das definiert wird für die Nebenstellenidentität.

9. Eine Telefonvermittlung nach Anspruch 1, **dadurch gekennzeichnet, dass** sie eine Einrichtung umfasst zum Speichern eines Dienstniveaus der Vermittlungsdienste zu der Vermittlung.

10. Eine Telefonvermittlung nach Anspruch 1, **dadurch gekennzeichnet, dass** sie eine Einrichtung (17) umfasst zum Speichern einer Nebenstellenidentität, die dem Telefonkommunikationsgerät (24) entspricht, das zu einer anderen Vermittlung oder Netz gehört, wobei die Nebenstellenidentität nicht die gleiche zu sein braucht, wie die Telefonnummer des Telefonkommunikationsgeräts (24) in der anderen Vermittlung oder Netz.

11. Verfahren zum Bereitstellen von fortschrittlichen Telefondiensten zu Anrufen von Telefonkommunikationsgeräten (24), die zu einer anderen Vermittlung (26) oder Netz (14) gehören, **gekennzeichnet durch** den Schritt eines zuordnens eines eingehenden Anrufs von einer anderen Vermittlung oder Netz zu einer Nebenstellenidentität bzw. Erweiterungsidentität in der Vermittlung, die dem anrufenden Telefongerät entspricht, mittels CLI-Information des eingehenden Anrufs.

12. Verfahren nach Anspruch 11, **gekennzeichnet durch** die folgenden Schritte:
- Empfangen eines Anrufs an der Telefonvermittlung (Schritt 102);
- Analysieren der CLI-Nummer (Schritt 104);
- Akzeptieren oder Ablehnen der CLI-Nummer (Schritt 106);
- Verwenden der CLI-Nummer zum Zuordnen des Anrufs zu einer Nebenstellennummer, falls die CLI-Nummer akzeptiert wird (Schritt 108); und
- Bereitstellen relevanter Dienste zu dem Anruf gemäß einem Dienstniveau, das spezifiziert wird für die Nebenstellenidentität (Schritt 110).

13. Verfahren nach Anspruch 11 oder 12, wobei das Verfahren ausgebildet ist für ein Präfix-Signalisieren zur Verbindung und Informationstransfer zwischen einem zellularen Netz und einer Telefonvermittlung (316) eines Telefonsystems, **dadurch gekennzeichnet, dass** das Verfahren die folgenden Schritte umfasst:
- Empfangen in der Telefonvermittlung einer Präfix-Nummer und einer Angerufene-Teilnehmer-Nummer, wobei die Präfix-Nummer hinzugefügt wurde durch die Mobilfunkvermittlung, in Abhängigkeit der Identität des anrufenden Teilnehmers, und einem Spezialzugangscode bzw. Feature-Zugangs-Code entspricht zum Zugreifen auf fortschrittliche Telefondienste (Schritt 210) ;
- Zuordnen einer Nebenstellenidentität der Vermittlung zu dem eingehenden Anruf, unter Verwendung der CLI-Nummer des Anrufs (Schritt 212) ;
- Einrichten des Anrufs und Ausführen von fortschrittlichen Telefondiensten, die verfügbar sind, gemäß dem Dienstniveau, das definiert wird für die Nebenstelle (Schritt 214).

14. Verfahren nach Anspruch 13, **dadurch gekennzeichnet, dass**
- der Spezialzugangscode empfangen wird in einem Angerufene-Nummer-Feld eines ISDN-Physikalischen-Zufallszugangskanals; und
- die Angerufene-Teilnehmer-Nummer empfangen wird, entweder in dem Angerufene-Nummer-Feld oder in einem Adressfeld eines ISDN-Physikalischen-Zufallszugangskanals.

15. Verfahren nach Anspruch 14, wobei das Verfahren ausgebildet ist zur Präfix-Signalisierung zur Verbindung und zum Informationstransfer zwischen einem zellularen Netz und einer Telefonvermittlung (12) eines Telefonsystems, **dadurch gekennzeichnet, dass** das Verfahren die folgenden Schritte umfasst zum automatischen Erzeugen und Übertragen einer Präfix-Nummer und Angerufene-Teilnehmer-Nummer von einem Mobilfunkkommunikationsendgerät (24) an eine Telefonvermittlung (12, 316) eines Telefonsystems, beim Anrufen:
- Initiieren einer Telfonkartenfunktion, gespeichert in dem Mobilfunkkommunikationsendgerät;
- Senden durch Verwendung der Telefonkartenfunktion eines Spezialzugangscodes zum Zugreifen auf fortschrittliche Telefondienste vor einer Teilnehmernummer zu der Telefonvermittlung des Telefonsystems.

16. Ein Computerprogrammprodukt zum Bereitstellen fortschrittlicher Telefondienste zu Anrufen von Telefonkommunikationsgeräten (24), die zu einer anderen Vermittlung (26) oder Netz (14) gehören, das Computerprogrammprodukt umfasst:
ein computer-lesbares Speichermedium mit computerlesbarem Programmcodemittel, verkörpert in dem Medium, wobei das computer-lesbare Programmcodemittel computer-lesbare Programmcodemittel zum Zuordnen eines eingehenden Anrufs von einer anderen Vermittlung oder Netz zu einer Nebenstellenidentität in der Vermittlung aufweist, die dem anrufenden Telefongerät entspricht, mittels CLI-Information des eingehenden Anrufs.

17. Ein Computerprogrammprodukt nach Anspruch 16, **dadurch gekennzeichnet, dass** das Computerprogrammprodukt umfasst:
ein computer-lesbares Speichermedium mit computerlesbarem Programmcodemittel, verkörpert in dem Medium, wobei das computer-lesbare Programmcodemittel umfasst:
- computer-lesbare Programmcodemittel zum Empfangen eines Anrufs zu der Telefonvermittlung;
- computer-lesbare Programmcodemittel zum Analysieren der CLI-Nummer;
- computer-lesbare Programmcodemittel zum Akzeptieren oder Ablehnen der CLI-Nummer;
- computer-lesbare Programmcodemittel zum Verwenden der CLI-Nummer zum Zuordnen des Anrufs zu einer Nebenstellennummer, falls die CLI-Nummer akzeptiert wird; und
- computer-lesbare Programmcodemittel zum Bereitstellen von relevanten Diensten zu dem Anruf gemäß einem Dienstniveau, das spezifiziert wird für die Nebenstellenidentität,

18. Ein Computerprogrammprodukt nach Anspruch 16, wobei das Computerprogrammprodukt ein computer-lesbares Programmcodemittel umfasst zur Präfix-Signalisierung, die eine Verbindung und einen Informationstransfer hervorruft, zwischen einem zellularen Netz und einer Telefonvermittlung eines Telefonsystems, **dadurch gekennzeichnet, dass** das Computerprogrammprodukt umfasst:
ein computer-lesbares Speichermedium mit computer-lesbaren Programmcodemittel verkörpert in dem Medium, wobei das computer-lesbare Programmcodemittel umfasst:
- ein computer-lesbares Codemittel zum Empfangen in der Vermittlung einer Präfix-Nummer und einer Angerufene-Teilnehmer-Nummer, wobei die Präfix-Nummer hinzugefügt wurde durch die Mobilfunkvermittlung, in Abhängigkeit der Identität des anrufenden Teilnehmers, und entsprechend zu einem Spezialzugangscode bzw. Feature-Zugangs-Code zum Zugreifen auf fortschrittliche Telefondienste;
- ein computer-lesbares Codemittel zum Zuordnen einer Nebenstellenidentität der Vermittlung zu dem eingehenden Anruf, unter Verwendung der CLI-Nummer des Anrufs;
- ein computer-lesbares Codemittel zum Einrichten des Anrufs und Ausführen von fortschrittlichen Telefondiensten, die verfügbar sind, gemäß dem Dienstniveau, das definiert wird für diese Nebenstelle.

19. Ein Computerprogrammprodukt nach Anspruch 18, wobei das computer-lesbare Programmcodemittel umfasst :
- ein computer-lesbares Codemittel zum Empfangen des Spezialzugangscodes in einem Angerufene-Nummer-Feld eines ISDN-Physikalischenzufallszugangskanals; und
- ein computer-lesbares Codemittel zum Empfangen einer Angerufene-Teilnehmer-Nummer, entweder in dem Angerufene-Nummern-Feld oder in einem Adressfeld eines ISDN-Physikalischen-Zufallszugangskanals.

20. Ein Computerprogrammprodukt nach Anspruch 16, wobei das Computerprogrammprodukt computer-lesbaren Programmcode umfasst zum automatischen Erzeugen und Übertragen einer Präfix-Nummer und einer Teilnehmernummer, wenn ein Anruf getätigt wird von einem Mobilfunkkommunikationsendgerät zu einer Telefonvermittlung, **gekennzeichnet durch** ein computer-lesbares Speichermedium mit computer-lesbaren Programmcodemittel, verkörpert in dem Medium, wobei das computer-lesbare Programmcodemittel umfasst:
- ein computer-lesbares Codemittel zum Initiieren einer Telefonkartenfunktion, die gespeichert ist in dem Mobilfunkkommunikationsendgerät;
- Senden **durch** Verwendung der Telefonkartenfunktion eines Spezialzugangscodes zum Zugreifen auf fortschrittliche Telefondienste vor einer ausgewählten Teilnehmernummer an die Telefonvermittlung des Telefonsystems.

21. Mittel zur Präfix-Signalisierung zur Verbindung und zum Informationstransfer zwischen einem zellularen Netz und einer Telefonvermittlung nach Anspruch 1, wobei das Mittel verwendet wird in einem Vermittler (MSC, 312) des zellularen Netzes, **dadurch gekennzeichnet, dass** das Mittel ferner umfasst:
- Mittel zum Empfangen einer Angerufene-Teilnehmer-Nummer in dem Vermittler (MSC, 312) des zellularen Netzes;
- Mittel zum Identifizieren des anrufenden Teilnehmers;
- Mittel zum Hinzufügen einer vordefinierten Präfix-Nummer, die ist oder entspricht einem Spezialzugangscode (FC) zum Zugreifen auf fortschrittliche Telefondienste;
- Mittel zum Übertragen der Präfix-Nummer und einer Teilnehmernummer an eine Telefonvermittlung (12, 316).

22. Mittel nach Anspruch 21, **dadurch gekennzeichnet, dass** das Mittel zum Übertragen der Präfix-Nummer und Teilnehmernummer an eine Telefonvermittlung (12, 316) umfasst:
- Mittel zum Übertragen des Spezialzugangscodes in einem Angerufene-Nummer-Feld eines ISDN-Physikalischen-Zufalls-Zugangskanals; und
- Mittel zum Übertragen eines angerufenen Teilnehmers entweder in dem fingerufene-Nummer-Feld oder in einem Adressfeld eines ISDN-Physikalischen-Zufalls-Zugangskanals.

23. Mittel zur Präfix-Signalisierung zur Verbindung und zum Informationstransfer zwischen einem zellularen Netz und einer Telefonvermittlung (12, 316) nach Anspruch 1, wobei das Mittel in der Telefonvermittlung verwendet wird, **dadurch gekennzeichnet, dass** das Mittel ferner umfasst:
- Mittel zum Empfangen in der Telefonvermittlung einer Präfix-Nummer und einer Angerufene-Teilnehmer-Nummer, wobei die Präfix-Nummer hinzugefügt wurde durch eine Mobilfunkvermittlung (326), in Abhängigkeit der Identität des anrufenden Teilnehmers, und entsprechend einem Spezialzugangscodes zum Zugreifen auf fortschrittliche Telefondienste;
- Mittel zum Zuordnen einer Nebenstellenidentität der Vermittlung zu dem eingehenden Anruf, unter Verwendung der CLI-Nummer des Anrufs;
- Mittel zum Einrichten des Anrufs und Durchführen von fortschrittlichen Telefondiensten, die verfügbar sind, gemäß dem Dienstniveau, das für die Nebenstelle definiert wird.

## Revendications

1. Commutateur (12) téléphonique pouvant fournir des services de téléphonie avancés à des dispositifs (24) de communication téléphonique appartenant à un autre commutateur (26) ou réseau (14), **caractérisé en ce que** celui-ci comporte un moyen (16, 17, 28, 30) destiné à associer un appel entrant en provenance d'un autre commutateur ou réseau à une identité d'extension dans le commutateur qui correspond au dispositif téléphonique appelant à l'aide d'informations CLI de l'appel entrant.

2. Commutateur téléphonique selon la revendication 1, **caractérisé en ce que** lesdits dispositifs (24) de communication téléphoniques sont des bornes de radiotéléphone mobiles pour une communication cellulaire.

3. Commutateur téléphonique selon la revendication 1 ou 2, **caractérisé en ce que** ledit commutateur téléphonique est agencé pour établir une liaison entre ledit dispositif (26) de communication téléphonique et le commutateur par l'intermédiaire d'un réseau téléphonique public commuté (RTPC) .

4. Commutateur téléphonique selon l'une quelconque des revendications précédentes, **caractérisé en ce que** le commutateur comporte un moyen destiné à transférer un appel vers une messagerie vocale, lorsqu'un numéro CLI fourni ne correspond à aucune identité d'extension ou lorsqu'aucun numéro CLI n'est fourni.

5. Commutateur téléphonique selon la revendication 4, **caractérisé en ce que** le commutateur comporte un moyen destiné à associer, à l'aide d'un code PIN, une identité d'extension dans le commutateur et un appel en provenance d'un dispositif de communication téléphonique appartenant à un autre commutateur ou réseau, dans lequel ledit code PIN est saisi par l'appelant ou envoyé par un téléphone.

6. Commutateur téléphonique selon l'une quelconque des revendications précédentes, **caractérisé en ce que** le commutateur comporte un moyen destiné à établir un appel vers une extension du commutateur correspondant à un dispositif de communication téléphonique appartenant à un autre commutateur ou réseau à l'aide d'un appel sortant à partir du commutateur vers le numéro du dispositif de communication téléphonique dans l'autre commutateur ou réseau.

7. Commutateur téléphonique selon l'une quelconque des revendications précédentes, **caractérisé en ce que** le commutateur comporte un moyen destiné à associer un appel entrant avec une identité (326) d'extension dans un commutateur (12, 316) téléphonique d'un système de téléphonie, ledit appel ayant un numéro CLI, **caractérisé en ce que** ledit moyen comporte :
- un moyen destiné à recevoir un appel audit commutateur téléphonique ;
- un moyen destiné à analyser le numéro CLI ;
- un moyen destiné à accepter ou rejeter le numéro CLI ;
- un moyen destiné à utiliser le numéro CLI pour associer l'appel à une identité d'extension, si le numéro CLI est accepté ; et
- un moyen destiné à fournir des services appropriés à l'appel selon un niveau de service spécifié pour l'identité d'extension.

8. Commutateur téléphonique selon la revendication 1, **caractérisé en ce que** le commutateur comporte :
- un moyen destiné à recevoir, dans ledit commutateur téléphonique, un préfixe et un numéro d'abonné appelé, ledit préfixe ayant été ajouté par un centre de commutation mobile selon l'identité de l'abonné appelant, et correspondant à un code d'accès de caractéristique pour un accès à des services de téléphonie avancés ;
- un moyen destiné à associer une identité d'extension du commutateur à l'appel entrant, en utilisant le numéro CLI de l'appel ;
- un moyen destiné à établir l'appel et effectuer des services de téléphonie avancés disponibles selon le niveau de service défini pour ladite identité d'extension.

9. Commutateur téléphonique selon la revendication 1, **caractérisé en ce qu'**il comporte un moyen destiné à stocker un niveau de service desdits services de commutateur à l'extension.

10. Commutateur téléphonique selon la revendication 1, **caractérisé en ce qu'**il comporte un moyen (17) destiné à stocker une identité d'extension correspondant au dispositif (24) de communication téléphonique appartenant à un autre commutateur ou réseau, dans lequel l'identité d'extension ne nécessite pas d'être identique au numéro de téléphone du dispositif (24) de communication téléphonique dans l'autre commutateur ou réseau.

11. Procédé destiné à fournir des services de téléphonie avancés à des appels en provenance de dispositifs (24) de communication téléphonique appartenant à un autre commutateur (26) ou réseau (14), **caractérisé par** l'étape d'association d'un appel entrant en provenance d'un autre commutateur ou réseau à une identité d'extension dans le commutateur qui correspond au dispositif téléphonique appelant à l'aide d'informations CLI de l'appel entrant.

12. Procédé selon la revendication 11, **caractérisé par** les étapes suivantes :
- la réception d'un appel audit commutateur téléphonique (étape 102) ;
- l'analyse du numéro CLI (étape 104) ;
- l'acceptation ou le rejet du numéro CLI (étape 106);
- l'utilisation du numéro CLI pour associer l'appel à un numéro d'extension, si le numéro CLI est accepté (étape 108) ; et
- la fourniture de services appropriés à l'appel selon un niveau de service spécifié pour l'identité d'extension (étape 110).

13. Procédé selon la revendication 11 ou 12, dans lequel ledit procédé est adapté pour une signalisation de préfixe pour une connexion et un transfert d'informations entre un réseau cellulaire et un commutateur (316) téléphonique d' système de téléphonie, **caractérisé en ce que** le procédé les étapes suivantes :
- la réception, dans ledit commutateur téléphonique, d'un préfixe et d'un numéro d'abonné appelé, ledit préfixe ayant été ajouté par le centre de commutation mobile selon l'identité de l'abonné appelant, et correspondant à un code d'accès de caractéristique pour un accès à des services de téléphonie avancés (étape 210) ;
- l'association d'une identité d'extension du commutateur à l'appel entrant, en utilisant le numéro de l'appel (étape 212) ;
- l'établissement de l'appel et la réalisation de services de téléphonie avancés disponibles selon le niveau de service défini pour ladite extension (étape 214).

14. Procédé selon la revendication 13, **caractérisé en ce que**
- le code d'accès de caractéristique est reçu dans un champ de numéro appelé d'un canal d'accès aléatoire physique RNIS ; et
- le numéro d'abonné appelé est reçu soit dans le champ de numéro appelé, soit dans un champ d'adresse d'un canal d'accès aléatoire physique RNIS.

15. Procédé selon la revendication 14, dans lequel ledit procédé est adapté pour une signalisation de préfixe pour une connexion et un transfert d'informations entre un réseau cellulaire et un commutateur (12) téléphonique d'un système de téléphonie, **caractérisé en ce que** le procédé comporte les étapes suivantes pour produire et transmettre automatiquement un préfixe et un numéro d'abonné appelé à partir d'une borne (24) de communication de radio mobile à un commutateur (12, 316) téléphonique d'un système de téléphonie lors d'un appel :
- l'initiation d'une fonction de carte d'appel stockée dans ladite borne de communication de radio mobile ;
- l'envoi par l'utilisation de la fonction de carte d'appel d'un code d'accès de caractéristique pour un accès à des services de téléphonie avancés avant un numéro d'abonné au commutateur téléphonique du système de téléphonie.

16. Produit de programme informatique destiné à fournir des services de téléphonie avancés à des appels en provenance de dispositifs (24) de communication téléphonique appartenant à un autre commutateur (26) ou réseau (14), le produit de programme informatique comportant :
un support de stockage pouvant être lu par un ordinateur ayant un moyen de code de programme pouvant être lu par un ordinateur incorporé dans ledit support, ledit moyen de code de programme pouvant être lu par un ordinateur comporte un moyen de code de programme pouvant être lu par un ordinateur pour associer un appel entrant en provenance d'un autre commutateur ou réseau à une identité d'extension dans le commutateur qui correspond au dispositif téléphonique appelant à l'aide d'informations CLI de l'appel entrant.

17. Produit de programme informatique selon la revendication 16, **caractérisé en ce que** le produit de programme informatique comporte : un support de stockage pouvant être lu par un ordinateur ayant un moyen de code de programme pouvant être lu par un ordinateur incorporé dans ledit support, ledit moyen de code de programme pouvant être lu par un ordinateur comporte :
- un moyen de code de programme pouvant être lu par un ordinateur destiné à recevoir un appel audit commutateur téléphonique ;
- un moyen de code de programme pouvant être lu par un ordinateur destiné à analyser le numéro CLI ;
- un de code de programme pouvant être lu par un ordinateur destiné à accepter ou rejeter le numéro CLI ;
- un moyen de code de programme pouvant être lu par un ordinateur destiné à utiliser le numéro CLI pour associer l'appel à un numéro d'extension, si le numéro CLI est accepté ; et
- un moyen de code de programme pouvant être lu par un ordinateur destiné à fournir des services appropriés à l'appel selon un niveau de service spécifie pour l'identité d'extension.

18. Produit de programme informatique selon la revendication 16, ledit produit de programme informatique comportant un moyen de code de programme pouvant être lu par un ordinateur pour une signalisation de préfixe provoquant une connexion et un transfert d'informations entre un réseau cellulaire et un commutateur téléphonique d'un système de téléphonie, **caractérisé en ce que** le produit de programme informatique comporte :
- un support de stockage pouvant être lu par un ordinateur ayant un moyen de code de programme pouvant être lu par un ordinateur incorporé dans ledit support, ledit moyen de code de programme pouvant être lu par un ordinateur comporte :
- un moyen de code pouvant être lu par un ordinateur destiné à recevoir dans ledit commutateur un préfixe et un numéro d'abonné appelé, ledit préfixe ayant été ajouté par le centre de commutation mobile selon l'identité de l'abonné appelant, et correspondant à un code d'accès de caractéristique pour un accès à des services de téléphonie avances ;
- un moyen de code pouvant être lu par un ordinateur destiné à associer une identité d'extension du commutateur à l'appel entrant, en utilisant le numéro CLI de l'appel ;
- un moyen de code pouvant être lu par un ordinateur destiné à établir l'appel et effectuer des services de téléphonie avancés disponibles selon le niveau de service défini pour ladite extension.

19. Produit de programme informatique selon la revendication 18, ledit moyen de code pouvant être lu par un ordinateur comporte :
- un moyen de code pouvant être lu par un ordinateur destiné à recevoir le code d'accès de caractéristique dans un champ de numéro appelé d'un canal d'accès aléatoire physique RNIS ; et
- un moyen de code pouvant être lu par un ordinateur destiné à recevoir un numéro d'abonné appelé soit dans le champ de numéro appelé, soit dans un champ d'adresse d'un canal d'accès aléatoire physique RNIS.

20. Produit de programme informatique selon la revendication 16, ledit produit de programme informatique comporte un code de programme pouvant être lu par un ordinateur pour produire et transmettre automatiquement un préfixe et un numéro d'abonné lors d'un appel à partir d'une borne de communication de radio mobile vers un commutateur téléphonique, **caractérisé par** un support de stockage pouvant être lu par un ordinateur ayant un moyen de code de programme pouvant être lu par un ordinateur incorporé dans ledit support, ledit moyen de code de programme pouvant être lu par un ordinateur comporte :
- un moyen de code pouvant être lu par un ordinateur destiné à initier une fonction de carte d'appel stockée dans ladite borne de communication de radio mobile.
- l'envoi, par l'utilisation de la fonction de carte d'appel, d'un code d'accès de caractéristique pour un accès à des services de téléphonie avancés avant un numéro d'abonné sélectionné au commutateur téléphonique du système de téléphonie.

21. Moyen destiné à une signalisation de préfixe pour une connexion et un transfert d'informations entre un réseau cellulaire et un commutateur téléphonique selon la revendication 1, ledit moyen étant utilisé à un centre (MSC, 312) de commutation du réseau cellulaire **caractérisé en ce que** ledit moyen comporte de plus :
- un moyen destiné à recevoir un numéro d'abonné appelé dans le centre (MSC, 312) de commutation du réseau cellulaire ;
- un moyen destiné à identifier l'abonné appelant ;
- un moyen destiné à ajouter un préfixe prédéfini, qui est, ou qui correspond à, un code d'accès de caractéristique (FC) pour un accès à des services de téléphonie avancés ;
- un moyen destiné à transmettre le préfixe et le numéro d'abonné à un commutateur (12, 316) téléphonique.

22. Moyen selon la revendication 21, **caractérisé en ce que** ledit moyen destiné à transmettre le préfixe et le numéro d'abonné à un commutateur (12, 316) téléphonique comporte :
- un moyen destiné à transmettre le code d'accès de caractéristique dans un champ de numéro appelé d'un canal d'accès aléatoire physique RNIS ; et
- un moyen destiné à transmettre un abonné appelé soit dans le champ de numéro appelé, soit dans un champ d'adresse d'un canal d'accès aléatoire physique RNIS.

23. Moyen destiné à une signalisation de préfixe pour une connexion et un transfert d'informations entre un réseau cellulaire et un commutateur (12, 316) téléphonique selon la revendication 1, ledit moyen étant utilisé dans le commutateur téléphonique, **caractérisé en ce que** ledit moyen comporte de plus :
- un moyen destiné à recevoir dans ledit commutateur téléphonique un préfixe et un numéro d'abonné appelé, ledit préfixe ayant été ajouté par un centre (326) de commutation mobile selon l'identité de l'abonné appelant, et correspondant à un code d'accès de caractéristique pour un accès à des services de téléphonie avancés ;
- un moyen destiné à associer une identité d'extension du commutateur à l'appel entrant, en utilisant un numéro CLI de l'appel ;
- un moyen destiné à établir l'appel et effectuer des services de téléphonie avancés disponibles selon le niveau de service défini pour ladite extension.
